# EUROPEAN PATENT APPLICATION

(11) **EP 4 780 104 A1**
(43) Date of publication of application: **22.07.2026**
(21) Application number: 24870397.7
(22) Date of filing: 05.09.2024
(51) Int. Cl.: H04W 72/0446

(54) **SOUNDING REFERENCE SIGNAL TRANSMISSION METHOD AND APPARATUS**

(30) Priority: 25.09.2023 CN 202311249978
(71) Applicant: HUAWEI TECHNOLOGIES CO., LTD., Shenzhen 518129 (CN)
(72) Inventor: YANG, Zhaoqing, Shenzhen, Guangdong 518129 (CN)
(74) Representative: Gill Jennings & Every LLP
(86) International application number: PCT/CN2024/117217
(87) International publication number: WO 2025/066851

(57) **Abstract**

This application relates to the field of communication technologies, and discloses a sounding reference signal transmission method and an apparatus. The method includes: receiving first configuration information used to configure a first periodicity, and sending at least one first sounding reference signal based on the first periodicity. The first periodicity is less than first duration, and the first duration is related to load of a first cell at a first moment. The at least one first sounding reference signal is used to estimate channel quality of full bandwidth of operating bandwidth of the first cell. In the foregoing method, the sending periodicity of the first sounding reference signal is less than the first duration, so that duration in which a network side performs beamforming by using a precoding matrix indication weight indicated by a terminal can be reduced, and the network side can learn of the channel quality of the terminal as soon as possible, thereby improving a data transmission rate.

## Description

This application claims priority to Chinese Patent Application No. 202311249978.7, filed with the China National Intellectual Property Administration on September 25, 2023 and entitled "SOUNDING REFERENCE SIGNAL TRANSMISSION METHOD AND APPARATUS", which is incorporated herein by reference in its entirety.

### TECHNICAL FIELD

This application relates to the field of communication technologies, and in particular, to a sounding reference signal transmission method and an apparatus.

### BACKGROUND

In a multiple-input multiple-output (multiple in multiple out, MIMO) system, beamforming may narrow a main lobe of a beam corresponding to a signal transmitted by a transmitter, and beam energy is more concentrated toward a receiver, so that the signal can be propagated farther, and has stronger energy when arriving at the receiver. Specifically, beamforming is to perform vector superposition on to-be-sent data and a weight, change an amplitude or a phase of a transmit signal, and then adjust a width and a direction of a beam. In addition, according to a wave interference principle, a beam arriving at the receiver is enhanced through coherent superposition.

Currently, before obtaining channel quality of full bandwidth of configured bandwidth of a terminal, a network device may perform beamforming based on a precoding matrix indication (precoding matrix indication, PMI) weight reported by the terminal. Specifically, the terminal may measure the channel quality based on a channel state information reference signal (channel state information reference signal, CSI-RS), select, based on the channel quality from several PMI weights, a PMI weight that best meets the current channel quality, and indicate the PMI weight to the network device, so that the network device determines a precoding matrix and performs vector superposition, to implement beamforming. Because the foregoing several PMI weights are obtained through channel quality quantization, and cannot perfectly fit all specific channel quality conditions, precision and directions of the PMI weights used for beamforming are not good. In this case, the network device cannot quickly and accurately learn of the channel quality of the terminal, and a data transmission rate is increased slowly.

### SUMMARY

This application provides a sounding reference signal transmission method and an apparatus, so that a network device can quickly and accurately learn of channel quality of a terminal, thereby improving a data transmission rate.

To achieve the foregoing objective, the following technical solutions are used in this application.

According to a first aspect, a sounding reference signal transmission method is provided. The method may be performed by a terminal, may be performed by a module used in the terminal, for example, a chip, a chip system, or a circuit, or may be implemented by a logical node, a logical module, or software that can implement all or some functions of the terminal. This is not limited herein. For ease of description, an example in which the method is performed by the terminal is used below for description.

The method includes: receiving first configuration information, where the first configuration information is used to configure a first periodicity, the first periodicity is less than first duration, and the first duration is related to load of a first cell at a first moment; and sending at least one first sounding reference signal based on the first periodicity, where the at least one first sounding signal is used to estimate channel quality of full bandwidth of operating bandwidth of the first cell.

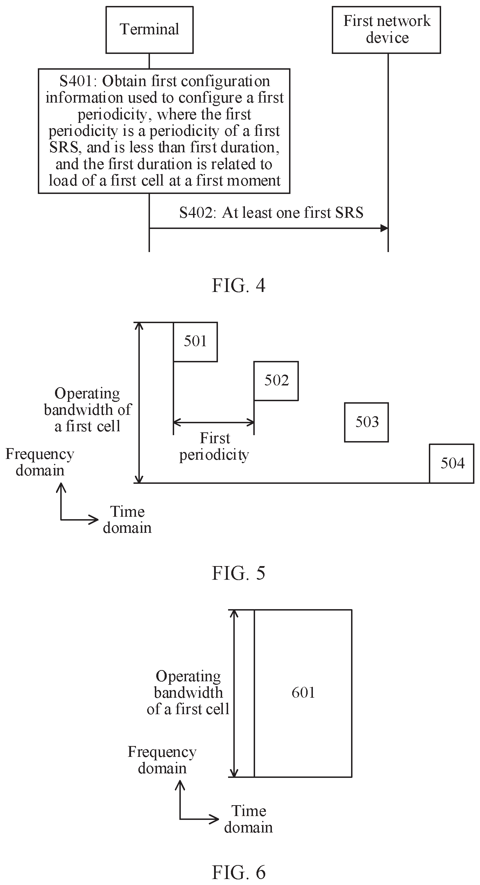

According to the method provided in the first aspect, the terminal may obtain the periodicity for sending the first sounding reference signal, and send the at least one first sounding reference signal based on the periodicity. The periodicity is less than specific duration. Therefore, according to the method provided in the first aspect, a communication apparatus (for example, the first network device in the method shown in FIG. 4) that receives the first sounding reference signal can collect the channel quality of the full bandwidth of the first cell as soon as possible, and perform beamforming based on the channel quality. Therefore, duration in which the communication apparatus performs beamforming by using a PMI weight can be reduced, thereby improving a data transmission rate.

In a possible implementation, the first cell is a cell of the first network device, and receiving the first configuration information includes: receiving the first configuration information from a second network device, where the first network device is different from the second network device.

According to the foregoing possible implementation, the terminal may obtain, via the second network device, the periodicity for sending the first sounding reference signal to the first network device, so that the terminal subsequently sends the first sounding reference signal to the first network device based on the periodicity. It may be understood that the foregoing possible implementation may be applied to a cell handover scenario, a secondary cell group (secondary cell group, SCG) addition scenario, an intra-primary secondary cell (primary secondary cell, PSCell) handover scenario, or an inter-PSCell handover scenario.

In a possible implementation, receiving the first configuration information includes: The terminal receives the first configuration information after accessing the first cell.

According to the foregoing possible implementation, after accessing the first cell, the terminal may obtain the periodicity for sending the first sounding reference signal.

In a possible implementation, the first configuration information includes first indication information, and the first indication information indicates the first periodicity.

According to the foregoing possible implementation, the periodicity for sending the first sounding reference signal may be configured for the terminal by using the first indication information.

In a possible implementation, a quantity of the at least one first sounding reference signal is greater than 1, frequency domain resources of any two of the at least one first sounding reference signal are different, and the frequency domain resources are located in the operating bandwidth of the first cell; or a quantity of the at least one first sounding reference signal is equal to 1, and the at least one first sounding reference signal occupies all the operating bandwidth of the first cell.

According to the foregoing possible implementation, the terminal may send the first sounding reference signal in different manners, to adapt to different communication scenarios. For example, the terminal may send the at least one first sounding reference signal in a plurality of periodicities by using different frequency domain resources, so that a network side implements channel estimation for the full bandwidth of the operating bandwidth of the first cell. Alternatively, the terminal may send the at least one first sounding reference signal on the full bandwidth of the operating bandwidth of the first cell in one periodicity, so that a network side implements channel estimation for the full bandwidth of the operating bandwidth of the first cell.

In a possible implementation, the method further includes: The terminal receives second configuration information, where the second configuration information indicates a second periodicity, the second periodicity is related to load of the first cell at a second moment, and the second moment is later than the first moment; and sends at least one second sounding reference signal based on the second periodicity.

According to the foregoing possible implementation, the terminal may further obtain the periodicity for sending the second sounding reference signal, and send the second sounding reference signal based on the periodicity, so that a communication apparatus that receives the second sounding reference signal performs channel estimation, to ensure communication quality of the terminal.

In a possible implementation, the first configuration information is carried in a radio resource control reconfiguration message.

According to the foregoing possible implementation, the terminal may obtain, by using an existing message (for example, the radio resource control reconfiguration message), the periodicity for sending the first sounding reference signal. This facilitates implementation.

According to a second aspect, a sounding reference signal transmission method is provided. The method may be performed by a first network device, may be performed by a module used in the first network device, for example, a chip, a chip system, or a circuit, or may be implemented by a logical node, a logical module, or software that can implement all or some functions of the first network device. This is not limited herein. For ease of description, an example in which the method is performed by the first network device is used below for description.

The method includes: sending first configuration information, where the first configuration information is used to configure a first periodicity, the first periodicity is less than first duration, and the first duration is related to load of a first cell at a first moment; and receiving at least one first sounding reference signal based on the first periodicity, where the at least one first sounding signal is used to estimate channel quality of full bandwidth of operating bandwidth of the first cell.

According to the method provided in the second aspect, the first network device may configure the first periodicity for receiving the first sounding reference signal, and receive the first sounding reference signal based on the first periodicity. The first periodicity is less than the first duration. Therefore, according to the method provided in the second aspect, the first network device can collect the channel quality of the full bandwidth of the first cell as soon as possible, to reduce duration in which the first network device performs beamforming by using a PMI weight, thereby improving a data transmission rate. In a possible implementation, the first configuration information includes first indication information, and the first indication information indicates the first periodicity.

According to the foregoing possible implementation, the first periodicity may be indicated by using the first indication information in the first configuration information.

In a possible implementation, sending the first configuration information includes: sending the first configuration information to a terminal after the terminal accesses the first cell.

According to the foregoing possible implementation, after the terminal accesses the first cell, for example, accesses the first cell in a random access process, the first network device may send the first configuration information to the terminal, so that the terminal sends the first sounding reference signal based on the first periodicity configured by using the first configuration information.

In a possible implementation, sending the first configuration information includes: sending the first configuration information to a second network device, where the second network device is different from the first network device.

According to the foregoing possible implementation, the first network device may configure the first periodicity via the second network device.

In a possible implementation, a quantity of the at least one first sounding reference signal is greater than 1, frequency domain resources of any two of the at least one first sounding reference signal are different, and the frequency domain resources are located in the operating bandwidth of the first cell; or a quantity of the at least one first sounding reference signal is equal to 1, and the at least one first sounding reference signal occupies all the operating bandwidth of the first cell.

According to the foregoing possible implementation, the first network device may receive the first sounding reference signal in different manners, to adapt to different communication scenarios. For example, the first network device may receive the at least one first sounding reference signal in a plurality of periodicities by using different frequency domain resources, to implement channel estimation for the full bandwidth of the operating bandwidth of the first cell. Alternatively, the first network device may receive the at least one first sounding reference signal on the full bandwidth of the operating bandwidth of the first cell in one periodicity, to implement channel estimation for the full bandwidth of the operating bandwidth of the first cell.

In a possible implementation, the method further includes: sending second configuration information, where the second configuration information indicates a second periodicity, the second periodicity is related to load of the first cell at a second moment, and the second moment is later than the first moment; and receiving at least one second sounding reference signal based on the second periodicity.

According to the foregoing possible implementation, the first network device may further configure the periodicity for receiving the second sounding reference signal, and receive the second sounding reference signal based on the periodicity, so that channel estimation is performed based on the received second sounding reference signal, to ensure communication quality of the terminal.

In a possible implementation, the first configuration information is carried in a radio resource control reconfiguration message.

According to the foregoing possible implementation, the first network device may configure, by using an existing message (for example, the radio resource control reconfiguration message), the periodicity for receiving the first sounding reference signal. This facilitates implementation.

According to a third aspect, a communication apparatus is provided, to implement the foregoing method. The communication apparatus may be the terminal in the first aspect, an apparatus including the terminal, a module in the terminal in the first aspect, for example, a chip, a chip system, or a circuit, or a logical node, a logical module, or software that can implement some or all functions of the terminal. Alternatively, the communication apparatus may be the first network device in the second aspect, an apparatus including the first network device, a module in the first network device in the second aspect, for example, a chip, a chip system, or a circuit, or a logical node, a logical module, or software that can implement some or all functions of the first network device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and an interface module. The processing module may be configured to implement a processing function in any one of the foregoing aspects and the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver machine, a transceiver, or a communication interface.

With reference to the third aspect, in a possible implementation, the interface module includes a sending module and a receiving module that are respectively configured to implement the sending and receiving functions in any one of the foregoing aspects and the possible implementations of the foregoing aspects.

According to a fourth aspect, a communication apparatus is provided, and includes a processor. The processor is configured to: be coupled to a storage, and after reading instructions in the storage, perform the method according to any one of the foregoing aspects based on the instructions. The communication apparatus may be the terminal in the first aspect, an apparatus including the terminal, a module in the terminal in the first aspect, for example, a chip, a chip system, or a circuit, or a logical node, a logical module, or software that can implement some or all functions of the terminal. Alternatively, the communication apparatus may be the first network device in the second aspect, an apparatus including the first network device, a module in the first network device in the second aspect, for example, a chip, a chip system, or a circuit, or a logical node, a logical module, or software that can implement some or all functions of the first network device.

With reference to the fourth aspect, in a possible implementation, the communication apparatus further includes the storage. The storage is configured to store program instructions and data. Optionally, the storage and the processor are integrated together, or the storage is independent of the processor.

With reference to the fourth aspect, in a possible implementation, the communication apparatus is a chip or a chip system. Optionally, when the communication apparatus is the chip system, the communication apparatus may include a chip, or may include a chip and another discrete device.

According to a fifth aspect, a communication apparatus is provided, and includes a processor and an interface circuit. The interface circuit is configured to: receive a computer program or instructions, and transmit the computer program or the instructions to the processor. The processor is configured to execute the computer program or the instructions, to enable the communication apparatus to perform the method according to any one of the foregoing aspects. The communication apparatus may be the terminal in the first aspect, an apparatus including the terminal, a module in the terminal in the first aspect, for example, a chip, a chip system, or a circuit, or a logical node, a logical module, or software that can implement some or all functions of the terminal. Alternatively, the communication apparatus may be the first network device in the second aspect, an apparatus including the first network device, a module in the first network device in the second aspect, for example, a chip, a chip system, or a circuit, or a logical node, a logical module, or software that can implement some or all functions of the first network device.

With reference to the fifth aspect, in a possible implementation, the communication apparatus is a chip or a chip system. Optionally, when the communication apparatus is the chip system, the communication apparatus may include a chip, or may include a chip and another discrete device.

According to a sixth aspect, a computer-readable storage medium is provided. The computer-readable storage medium stores instructions. When the instructions are run on a computer, the computer is enabled to perform the method according to any one of the foregoing aspects.

According to a seventh aspect, a computer program product including instructions is provided. When the computer program product runs on a computer, the computer is enabled to perform the method according to any one of the foregoing aspects.

According to an eighth aspect, a communication system is provided. The communication system includes a terminal configured to perform the method according to the first aspect and a first network device configured to perform the method according to the second aspect.

For technical effects achieved by any one of the possible implementations of the third aspect to the eighth aspect, refer to technical effects achieved by any one of the first aspect, the second aspect, or different possible implementations of the first aspect or the second aspect. Details are not described herein again.

It may be understood that the solutions in the foregoing aspects may be combined if the solutions are not contradictory.

### BRIEF DESCRIPTION OF DRAWINGS

FIG. 1A is a schematic flowchart of a scenario in which a terminal initially accesses a network according to this application;
FIG. 1B is a schematic flowchart of scenario in which a terminal re-accesses a network according to this application;
FIG. 1C is a schematic flowchart of a cell handover scenario according to this application;
FIG. 1D is a schematic flowchart of an SCG addition scenario according to this application;
FIG. 1E is a schematic flowchart of an intra-PSCell handover scenario according to this application;
FIG. 1F is a schematic flowchart of an inter-PSCell handover scenario according to this application;
FIG. 2 is a diagram of an architecture of a communication system according to this application;
FIG. 3 is a diagram of a hardware structure of a communication apparatus according to this application;
FIG. 4 is a schematic flowchart 1 of a sounding reference signal transmission method according to this application;
FIG. 5 is a diagram 1 of a manner in which a terminal sends a first sounding reference signal (sounding reference Signal, SRS) according to this application;
FIG. 6 is a diagram 2 of a manner in which a terminal sends a first SRS according to this application;
FIG. 7 is a schematic flowchart 2 of a sounding reference signal transmission method according to this application; and
FIG. 8 is a diagram of a structure of a communication apparatus according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Terminal

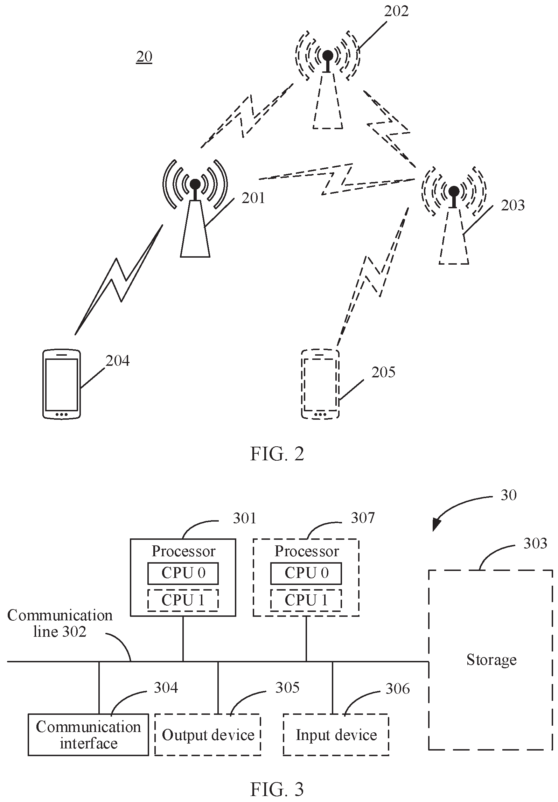

The terminal in this application, for example, the terminal 204 or the terminal 205 in FIG. 2, is a device with a wireless transceiver function. The terminal may be deployed on land, including an indoor terminal, an outdoor terminal, a handheld terminal, or a vehicle-mounted terminal; may be deployed on a water surface (for example, on a ship); or may be deployed in the air (for example, on an aircraft, a balloon, or a satellite). The terminal may also be referred to as a terminal device. The terminal device may be user equipment (user equipment, UE), a mobile station (mobile station, MS), a mobile terminal (mobile terminal, MT), or the like, or may be a device configured to provide voice or data connectivity for a user. The UE includes a handheld device with a wireless communication function, a vehicle-mounted device (for example, on an automobile, a bicycle, an electric vehicle, an airplane, a ship, a train, or a high-speed train), a wearable device (for example, a smartwatch, a smart band, or a pedometer), or a compute device. For example, the UE may be a mobile phone (mobile phone), a tablet computer, a notebook computer, a palmtop computer, a mobile internet device (mobile internet device, MID), a satellite terminal, or a computer with a wireless transceiver function. Alternatively, the UE may be a virtual reality (virtual reality, VR) terminal device, an augmented reality (augmented reality, AR) terminal device, a wireless modem (modem), a smart point of sale (point of sale, POS) machine, customer-premises equipment (customer-premises equipment, CPE), a smart robot, a mechanical arm, a workshop device, a smart home device (for example, a refrigerator, a television, an air conditioner, or an electric meter), a wireless terminal in industrial control, a wireless terminal in self-driving, a wireless terminal in telemedicine, a wireless terminal in a smart grid (smart grid), a wireless terminal in transportation safety, a wireless terminal in a smart city (smart city), a wireless terminal in a smart home (smart home), a vehicle-mounted terminal, a road side unit (road side unit, RSU) with a function of the terminal, a flight device (for example, a smart robot, a hot air balloon, an uncrewed aerial vehicle, or an airplane), or the like. Alternatively, the terminal may be another device with a function of the terminal. For example, the terminal may alternatively be a device that undertakes a function of the terminal in device-to-device (device-to-device, D2D) communication.

By way of example and not limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement complete or partial functions without relying on smartphones, for example, smart watches or smart glasses; and include devices that focus only on one type of application function and that need to be used together with other devices such as smartphones, for example, various smart bands or smart jewelry for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is disposed in a vehicle as one or more components or units. The vehicle uses the vehicle-mounted module, the vehicle-mounted component, the onboard component, the vehicle-mounted chip, or the vehicle-mounted unit that is disposed in the vehicle, to implement the method in this application. The terminal in this application may be a means of delivery, for example, a vehicle. Therefore, this application may be applied to an internet of vehicles, for example, vehicle-to-everything (vehicle-to-everything, V2X), a long term evolution-vehicle (long term evolution-vehicle, LTE-V) technology, and vehicle-to-vehicle (vehicle-to-vehicle, V2V).

A form of the terminal is not limited in this application. An apparatus configured to implement a function of the terminal may be a terminal, or may be an apparatus that can support the terminal in implementing the function, for example, a chip system. The apparatus may be installed in the terminal or used in cooperation with the terminal.

### 2. Network device

The network device in this application, for example, the network device 201, the network device 202, or the network device 203 in FIG. 2, or the first network device, the second network device, or the third network device in the following embodiments may be a device with a wireless transceiver function, and may help a terminal implement wireless access. The network device in this application may also be referred to as a node, a RAN node, an access network device, or the like in a radio access network (radio access network, RAN). The network device includes but is not limited to: an evolved NodeB (NodeB or eNB or e-NodeB, evolved NodeB) in long term evolution (long term evolution, LTE), an evolved NodeB (next generation eNB, ng-eNB) in next-generation LTE, a NodeB (gNodeB or gNB) in new radio (new radio, NR), a transmitting point (transmitting point, TP) or a transmission reception point (transmission receiving point/transmission reception point, TRP), a base station evolved after the 3rd generation partnership project (3rd generation partnership project, 3GPP), a next generation NodeB (next generation NodeB, gNB), a next generation base station in a 6th generation (6th generation, 6G) mobile communication system, a base station in a future mobile communication system, a satellite, an access node in a wireless fidelity (wireless fidelity, Wi-Fi) system, a wireless relay node, a wireless backhaul node, an integrated access and backhaul (integrated access and backhaul, IAB) node, a mobile switching center, and a network device in a non-terrestrial communication network (non-terrestrial network, NTN) communication system, that is, may be deployed on a high-altitude platform, a satellite, or the like. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. Alternatively, the network device may be a device that undertakes a function of the base station in D2D communication, internet of vehicles communication, uncrewed aerial vehicle communication, or machine communication. The network device may alternatively be a radio controller in a cloud radio access network (cloud radio access network, CRAN) scenario. The network device may alternatively be a central unit (central unit, CU), a distributed unit (distributed unit, DU), a CU-control plane (control plane, CP), a CU-user plane (user plane, UP), a radio unit (radio unit, RU), a road side unit (road side unit, RSU) with a function of the base station, a wired access gateway, a core network element, or the like. The network device may alternatively be a server, a wearable device, a machine communication device, a vehicle-mounted device, or the like. For example, a network device in a V2X technology may be an RSU. The following uses an example in which the network device is a base station for description. The plurality of network devices may be base stations of a same type, or may be base stations of different types. The base station may communicate with the terminal, or may communicate with the terminal via a relay station. The terminal may communicate with a plurality of base stations using different technologies. For example, the terminal may communicate with a base station supporting an LTE network, may communicate with a base station supporting a 5th generation (5th generation, 5G) network, or may support dual connectivity to a base station in an LTE network and a base station in a 5G network.

In this application, the CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the CU may be classified as a network device in an access network, or the CU may be classified as a network device in a core network. This is not limited herein.

In different systems, the CU (or the CU-CP and the CU-UP), the DU, or the RU may alternatively have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

It may be understood that, in some scenarios, roles of the network device and the terminal are relative. For example, a helicopter or an uncrewed aerial vehicle that is usually configured as a terminal may be alternatively configured as a mobile base station, and a device that accesses a RAN via the helicopter or the uncrewed aerial vehicle is configured as a terminal.

A form of the network device is not limited in this application. An apparatus configured to implement a function of the network device may be a network device, or may be an apparatus that can support the network device in implementing the function, for example, a chip system. The apparatus may be installed in the network device or used in cooperation with the network device.

### 3. Beamforming

In this application, a network device and/or a terminal have/has a multi-antenna array, and may perform beamforming, to aggregate transmit power to a direction to which a beam points, so that transmit power is higher in the direction to which the beam points, and a signal is transmitted farther.

The following describes a beamforming principle by using an example in which the network device is a transmitter and the terminal is a receiver. The network device transmits a plurality of electromagnetic waves by using a multi-antenna array of the network device. According to a wave interference principle, when wave peaks or wave troughs of the plurality of electromagnetic waves are superimposed, energy of the electromagnetic waves is also superimposed. In this case, constructive interference is formed. On the contrary, if a wave peak and a wave trough meet, the wave peak and the wave trough cancel out each other. In this case, destructive interference is formed. At a place at which the wave peaks or the wave troughs are superimposed, the energy of the electromagnetic waves is the strongest, and a directional beam, that is, a main lobe beam, is formed. Energy in some areas far away from the main lobe beam cancels out each other due to destructive interference, and in some areas, constructive interference is also formed. However, beam energy is weaker than that of the main lobe beam. This type of beam is a side lobe beam. An objective of beamforming is to enhance accuracy of a direction of the main lobe beam, so that the main lobe beam points to the terminal; and suppress the energy of the side lobe beam, so that energy is concentrated on the main lobe beam. In this way, electromagnetic wave loss is smaller, and the electromagnetic waves can be transmitted farther.

In this application, the network device may determine a corresponding precoding scheme by using a PMI weight or an SRS, to perform beamforming. The following provides detailed descriptions.

### 4. Beamforming by using a PMI weight

First, a network device and a terminal store several PMI weights. These PMI weights are discrete codebooks obtained through channel quality quantization. Therefore, different PMI weights correspond to different channel quality. The network device may send a CSI-RS to the terminal, and the terminal may estimate downlink channel quality based on the CSI-RS, determine a PMI weight corresponding to the downlink channel quality, and indicate the PMI weight to the network device. In this way, the network device may determine a corresponding precoding scheme with reference to the PMI weight indicated by the terminal, to perform beamforming. Alternatively, the network device may determine, based on a reciprocity principle, a precoding scheme corresponding to an uplink channel, and indicate the precoding scheme to the terminal, so that the terminal implements beamforming based on the precoding scheme.

### 5. Beamforming by using an SRS

A network device may configure an SRS resource for a terminal, so that the terminal sends an SRS to the network device on the SRS resource. Subsequently, the network device determines, based on the received SRS, uplink channel quality of full bandwidth corresponding to the terminal, and determines, with reference to a reciprocity principle, a precoding scheme corresponding to the downlink channel quality, to perform beamforming. Alternatively, the network device determines, based on the received SRS, uplink channel quality of full bandwidth corresponding to the terminal, determines a corresponding precoding scheme based on the uplink channel quality, and indicates the precoding scheme to the terminal, so that the terminal implements beamforming by using the corresponding precoding scheme based on the indication of the network device.

It may be understood that it takes specific time for the network device to receive the SRS and determine the uplink channel quality of the full bandwidth corresponding to the terminal. Therefore, before this, the network device or the terminal can perform beamforming by using a PMI weight. The following separately uses a scenario in which the terminal initially accesses a network, a scenario in which the terminal re-accesses the network, a cell handover scenario, an SCG addition scenario, an intra-PSCell handover scenario, and an inter-PSCell handover scenario as examples for description.

### 6. Scenario in which a terminal initially accesses a network

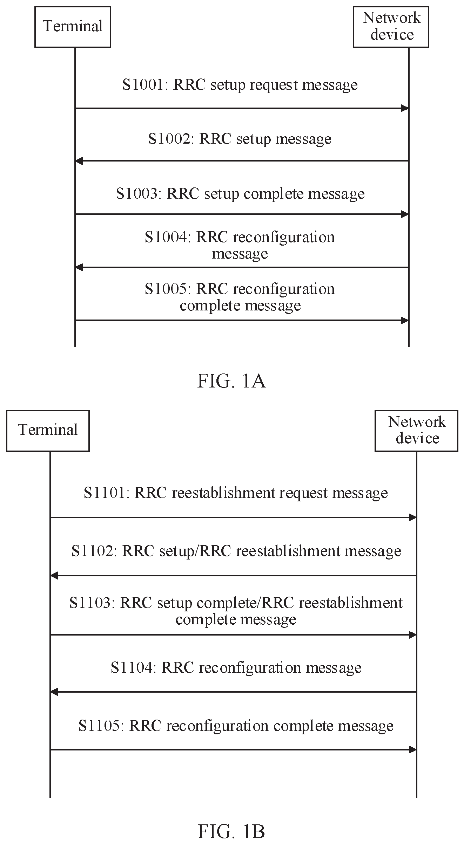

Refer to FIG. 1A. The scenario in which the terminal initially accesses the network may include the following steps.

S1001: The terminal sends a radio resource control (radio resource control, RRC) setup request (RRCSetupRequest) message to a network device. Correspondingly, the network device receives the RRC setup request message from the terminal.

It may be understood that, if the terminal has a requirement for sending data or receiving data, a non-access stratum (non-access stratum, NAS) of the terminal triggers an RRC layer to initiate an RRC setup procedure. For example, the terminal sends the RRC setup request message to the network device through an air interface. The RRC setup request message may include an identifier of the terminal (for example, UE-Identity), and the RRC setup request message may further indicate a reason why the terminal requests to set up RRC.

S1002: The network device sends an RRC setup (RRCSetup) message to the terminal. Correspondingly, the terminal receives the RRC setup message from the network device.

It may be understood that, after receiving the RRC setup request message, if the terminal is allowed to access the network, the network device may send the RRC setup message to the terminal, to configure a radio resource configuration for the terminal, for example, including content like a physical layer configuration, a medium access control (medium access control, MAC) layer configuration, a packet data convergence protocol (packet data convergence protocol, PDCP) layer configuration, and a radio link control (radio link control, RLC) layer configuration. Correspondingly, after receiving the RRC setup message, the terminal may perform corresponding configuration, for example, set up a signaling radio bearer (signaling radio bearer, SRB) 1. The SRB1 is used to carry RRC signaling between the network device and the terminal after the terminal enters a connected state.

S1003: The terminal sends an RRC setup complete (RRCSetupComplete) message to the network device. Correspondingly, the network device receives the RRC setup complete message from the terminal.

It may be understood that after completing configuration indicated in the RRC setup message, the terminal sends the RRC setup complete message to the network device. In this case, the RRC connection is set up.

S1004: The network device sends an RRC reconfiguration (RRCReconfiguration) message to the terminal. Correspondingly, the terminal receives the RRC reconfiguration message from the network device.

It may be understood that, after the RRC connection is set up, the network device may send one or more RRC reconfiguration messages to the terminal, to reconfigure a radio resource. For example, the network device may send the RRC reconfiguration message to the terminal in S1004, to configure an SRB2, a data radio bearer (data radio bearer, DRB), and an SRS resource set. The SRS resource set indicates a time domain resource and a frequency domain resource for sending an SRS by the terminal.

S1005: The terminal sends an RRC reconfiguration complete (RRCReconfigurationComplete) message to the network device. Correspondingly, the network device receives the RRC reconfiguration complete message from the terminal.

It may be understood that, after completing radio resource configuration based on the RRC reconfiguration message, the terminal sends the RRC reconfiguration complete message to the network device, to indicate that RRC reconfiguration is completed.

In the foregoing process, the network device and the terminal may first perform beamforming by using a PMI weight, and send corresponding messages. After the network device receives an SRS and determines uplink channel quality of full bandwidth corresponding to the terminal, the network device and the terminal may perform beamforming by using the SRS. For example, the network device and the terminal perform beamforming by using the PMI weight in S1001 to S1005, and perform beamforming by using the SRS in a step after S1005.

### 7. Scenario in which a terminal re-accesses a network

It may be understood that, re-accessing the network refers to an RRC reestablishment (RRCReestablishment) procedure initiated by the terminal to resume an RRC connection, when the terminal performs local release (local release) due to some exception causes in a connected state. Refer to FIG. 1B. The scenario in which the terminal re-accesses the network may include the following steps.

S1101: The terminal sends an RRC reestablishment request (RRCReestablishmentRequest) message to a network device. Correspondingly, the network device receives the RRC reestablishment request message from the terminal.

It may be understood that, when the terminal is in the connected state, some exceptions may occur. For example, integrity protection detection of an SRB fails; random access is reinitiated because a quantity of scheduling requests (scheduling requests, SRs) reaches a maximum quantity, and the random access also fails; or a radio link fails. The terminal initiates RRC reestablishment to resume the RRC connection. For example, the terminal initiates an RRC reestablishment procedure by sending the RRC reestablishment request message to the network device. The RRC reestablishment request message may include content such as an identifier of the terminal (for example, ue-identity), indication information indicating a reestablishment cause (cause), a cell radio network temporary identifier (cell radio network temporary identity, C-RNTI), an identifier of a cell (for example, a physCellID) in which the terminal is located before RRC reestablishment, and a short medium access control identifier (shortMAC-I) used for integrity protection of SRB1 signaling.

S1102: The network device sends an RRC setup/reestablishment message to the terminal. Correspondingly, the terminal receives the RRC setup/reestablishment message from the network device.

It may be understood that after receiving the RRC reestablishment request message, when the terminal is allowed to access and the network device successfully obtains a context (context) of the terminal, the network device sends the RRC reestablishment (RRCReestablishment) message to the terminal, to resume the previous RRC connection. Alternatively, after receiving the RRC reestablishment request message, when the terminal is allowed to access and the network device fails to obtain a context of the terminal, the network device sends the RRC setup message to the terminal, to set up a new RRC connection.

S1103: The terminal sends an RRC setup/reestablishment complete message to the network device. Correspondingly, the network device receives the RRC setup/reestablishment complete message from the terminal.

It may be understood that after receiving the RRC reestablishment message and resume the previous RRC connection, the terminal may send the RRC reestablishment complete (RRCReestablishmentComplete) message to the network device. Alternatively, after receiving the RRC setup message and setting up the new RRC connection, the terminal may send the RRC setup complete message to the network device.

S1104: The network device sends an RRC reconfiguration message to the terminal. Correspondingly, the terminal receives the RRC reconfiguration message from the network device.

S1105: The terminal sends an RRC reconfiguration complete message to the network device. Correspondingly, the network device receives the RRC reconfiguration complete message from the terminal.

It may be understood that a process of S1104 and S1105 is similar to a process of S1004 and S1005. Therefore, refer to corresponding descriptions in S1004 and S1005. Details are not described again.

In the foregoing process, the network device and the terminal may first perform beamforming by using a PMI weight, and send corresponding messages. After the network device receives an SRS and determines uplink channel quality of full bandwidth corresponding to the terminal, the network device and the terminal may perform beamforming by using the SRS. For example, the network device and the terminal perform beamforming by using the PMI weight in S1101 to S1105, and perform beamforming by using the SRS in a step after S1105.

### 8. Cell handover scenario

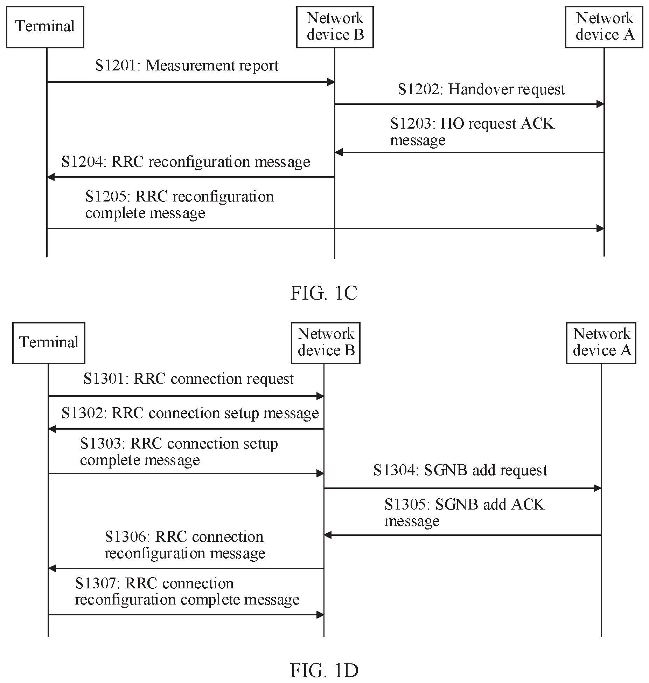

Refer to FIG. 1C. The cell handover scenario may include the following steps.

S1201: A terminal sends a measurement report (MeasurementReport) to a network device B. Correspondingly, the network device B receives the measurement report from the terminal.

It may be understood that, when the terminal camps on a cell of the network device B, the terminal may measure signal quality of a neighboring cell of the cell, or measure signal quality of the cell and signal quality of a neighboring cell of the cell. When the measured signal quality meets a measurement reporting condition, the terminal may send the measurement report to a network device A.

For example, the terminal measures reference signal received power (reference signal received power, RSRP) of a cell of the network device A (that is, the neighboring cell of the cell of the network device B), and sends the measurement report to the network device B when the RSRP is greater than a specific threshold. Alternatively, the terminal measures RSRP of a cell of the network device A and RSRP of the cell of the network device B, and sends the measurement report to the network device A when the RSRP of the cell of the network device B is less than a first threshold and the RSRP of the cell of the network device A is greater than a second threshold.

S1202: The network device B sends a handover request (handover request, HO request) to the network device A. Correspondingly, the network device A receives the handover request from the network device B.

The handover request is used to request to hand over a cell for the terminal.

S1203: The network device A sends an HO request ACK (HO request ACK) message to the network device B. Correspondingly, the network device B receives the HO request ACK message from the network device A.

It may be understood that, if the network device A agrees to perform cell handover, the network device A may send the HO request ACK message to the network device B.

S1204: The network device B sends an RRC reconfiguration message to the terminal. Correspondingly, the terminal receives the RRC reconfiguration message from the network device B.

It may be understood that the RRC reconfiguration message in S1204 may indicate an identifier of the cell of the network device A, a time domain resource and a frequency domain resource that are used after the terminal is handed over to the cell of the network device B, and the like. The RRC reconfiguration message may further indicate an SRS resource set.

S1205: The terminal sends an RRC reconfiguration complete message to the network device A. Correspondingly, the network device A receives the RRC reconfiguration complete message from the terminal.

In the foregoing process, the network device A and the terminal may first perform beamforming by using a PMI weight, and send corresponding messages. After the network device B receives an SRS and determines uplink channel quality of full bandwidth corresponding to the terminal, the network device A and the terminal may perform beamforming by using the SRS. For example, the network device A and the terminal perform beamforming by using the SRS in a step after S1205.

### 9. SCG addition scenario

Refer to FIG. 1D. The SCG addition scenario may include the following steps.

S1301: A terminal sends an RRC connection request (RRCConnectionRequest) to a network device B. Correspondingly, the network device B receives the RRC connection request from the terminal.

The RRC connection request is used to request to set up an RRC connection.

S1302: The network device B sends an RRC connection setup (RRCConnectionSetup) message to the terminal. Correspondingly, the terminal receives the RRC connection setup message from the network device B.

The RRC connection setup message is used to configure a radio resource configuration.

S1303: The terminal sends an RRC connection setup complete (RRCConnectionSetupComplete) message to the network device B. Correspondingly, the network device B receives the RRC connection setup complete message from the terminal.

It may be understood that S1301 to S1303 describe a process in which the terminal enters a connected state. After S1303 is performed, the terminal is connected to a cell of a network device A. Subsequently, when the terminal detects, through measurement, that RSRP of a neighboring cell of the cell of the network device A, for example, a cell of the network device A, is greater than a specific threshold, the terminal may report a measurement report to the network device A. The network device A may add an SCG for the terminal based on the measurement report, for example, perform the following steps.

S1304: The network device B sends a secondary gNB (secondary gNB, SGNB) add request (SGNB Add Request) to the network device A. Correspondingly, the network device A receives the SGNB add request from the network device A.

The SGNB add request may be used to request to add the SCG for the terminal.

S1305: The network device A sends an SGNB add ACK (SGNB Add ACK) message to the network device B. Correspondingly, the network device B receives the SGNB add ACK from the network device A.

It may be understood that if the network device A agrees to add the SCG for the terminal, the network device A may send the SGNB add ACK to the network device B.

S1306: The network device B sends an RRC connection reconfiguration (RRCConnectionReconfiguration) message to the terminal. Correspondingly, the terminal receives the RRC connection reconfiguration message from the network device B.

The RRC connection reconfiguration message may indicate an SRS resource set.

S1307: The terminal sends an RRC connection reconfiguration complete (RRCReconfigurationComplete) message to the network device B. Correspondingly, the network device B receives the RRC connection reconfiguration complete message from the terminal.

In the foregoing process, the network device A and the terminal may first perform beamforming by using a PMI weight, and send corresponding messages. After the network device A receives an SRS and determines uplink channel quality of full bandwidth corresponding to the terminal, the network device A and the terminal may perform beamforming by using the SRS. For example, the network device A and the terminal perform beamforming by using the SRS in a step after S1307.

### 10. Intra-PSCell handover scenario

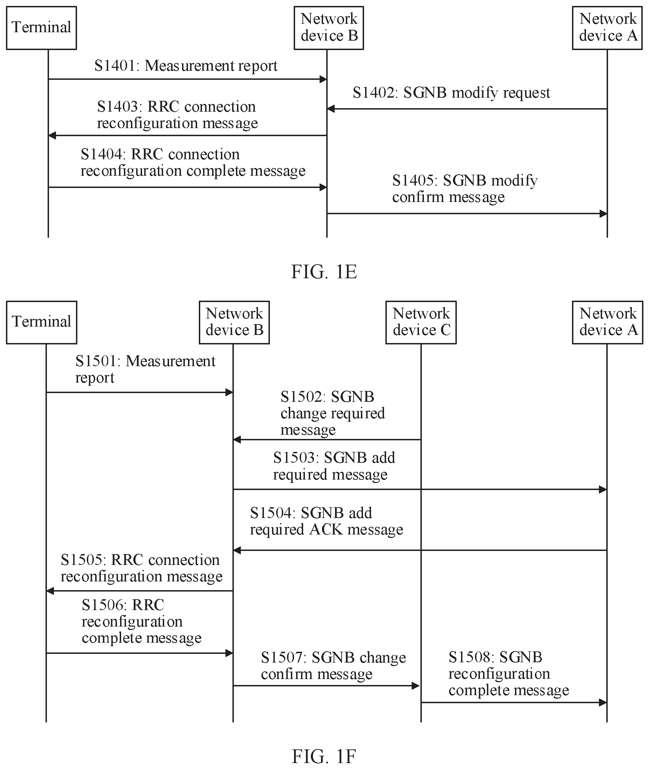

Refer to FIG. 1E. The intra-PSCell handover scenario may include the following steps.

S1401: A terminal sends a measurement report to a network device B. Correspondingly, the network device B receives the measurement report from the terminal.

It may be understood that, when a PSCell currently connected to the terminal is a first cell of a network device A, if the terminal detects, through measurement, that RSRP of a neighboring cell (for example, a second cell of the network device A) of the first cell is greater than a third threshold, and RSRP of the first cell is less than a fourth threshold, the terminal may report the measurement report to a network device (for example, the network device B) to which a primary cell (primary cell, PCell) currently connected to the terminal belongs.

It may be understood that after receiving the measurement report, the network device B may send the measurement report to the network device A, so that the network device A configures, for the terminal, a radio resource corresponding to the cell of the network device A.

S1402: The network device B sends an SGNB modify request (SGNB Modify Request) to the network device B. Correspondingly, the network device B receives the SGNB modify request from the network device A.

The SGNB modify request may be used to configure, for the terminal, a radio resource corresponding to the second cell.

S1403: The network device B sends an RRC connection reconfiguration message to the terminal. Correspondingly, the terminal receives the RRC connection reconfiguration message from the network device B.

The RRC connection reconfiguration message may indicate an SRS resource set.

S1404: The terminal sends an RRC connection configuration complete message to the network device B. Correspondingly, the network device B receives the RRC connection configuration complete message from the terminal.

S1405: The network device B sends an SGNB modify confirm (SGNB Modify Confirm) message to the network device A. Correspondingly, the network device A receives the SGNB modify confirm message from the network device B.

In the foregoing process, the network device A and the terminal may first perform beamforming by using a PMI weight, and send corresponding messages. After the network device A receives an SRS and determines uplink channel quality of full bandwidth corresponding to the terminal, the network device A and the terminal may perform beamforming by using the SRS. For example, the network device A and the terminal perform beamforming by using the SRS in a step after S1405.

### 11. Inter-PSCell handover scenario

Refer to FIG. 1F. The inter-PSCell handover scenario may include the following steps.

S1501: A terminal sends a measurement report to a network device B. Correspondingly, the network device B receives the measurement report from the terminal.

It may be understood that when a PSCell currently connected to the terminal is a cell of a network device C, if the terminal detects, through measurement, that RSRP of a neighboring cell (for example, a cell of a network device A) of the cell of the network device C is greater than a fifth threshold, and RSRP of the cell of the network device C is less than a sixth threshold, the terminal may report the measurement report to a network device (for example, the network device B) to which a PCell currently connected to the terminal belongs.

It may be understood that after receiving the measurement report, the network device B may send the measurement report to the network device C, so that the network device C requests the network device B to initiate an SGNB change procedure.

S1502: The network device C sends an SGNB change required (SGNB Change Required) message to the network device B. Correspondingly, the network device B receives the SGNB change required message from the network device C.

S1503: The network device B sends an SGNB add required (SGNB Add Required) message to the network device A. Correspondingly, the network device A receives the SGNB add required message from the network device B.

The SGNB add required message is used to request to connect the terminal to the cell of the network device A.

S1504: The network device A sends an SGNB add required ACK (SGNB Add Required ACK) message to the network device B. Correspondingly, the network device B receives the SGNB add required ACK message from the network device A.

The SGNB add required ACK message may indicate an SRS resource set.

S1505: The network device B sends an RRC connection reconfiguration message to the terminal. Correspondingly, the terminal receives the RRC connection reconfiguration message from the network device B.

The RRC connection reconfiguration message may indicate an SRS resource set.

S1506: The terminal sends an RRC connection configuration complete message to the network device B. Correspondingly, the network device B receives the RRC connection configuration complete message from the terminal.

S1507: The network device B sends an SGNB change confirm (SGNB Change Confirm) message to the network device C. Correspondingly, the network device C receives the SGNB change confirm message from the network device B.

S1508: The network device C sends an SGNB reconfiguration complete (SGNB reconfig Complete) message to the network device A. Correspondingly, the network device A receives the SGNB reconfiguration complete message from the network device C.

In the foregoing process, the network device A and the terminal may first perform beamforming by using a PMI weight, and send corresponding messages. After the network device A receives an SRS and determines uplink channel quality of full bandwidth corresponding to the terminal, the network device A and the terminal may perform beamforming by using the SRS. For example, the network device A and the terminal perform beamforming by using the SRS in a step after S1505.

It may be understood that the foregoing scenario is merely an example scenario in which beamforming is performed by using the PMI weight and the SRS. In specific application, beamforming performed by using the PMI weight and the SRS may be further applied to another scenario, for example, an RRC resume (resume) scenario. Specifically, when a terminal is in an inactive state, the terminal may initiate an RRC resume procedure to enter an RRC connected state. After the terminal enters the RRC connected state, a network device may configure an SRS resource set for the terminal. Therefore, in this scenario, the network device and the terminal also first perform beamforming by using a PMI weight. After the network device receives an SRS and determines uplink channel quality of full bandwidth corresponding to the terminal, the network device and the terminal perform beamforming by using the SRS.

In conclusion, before obtaining the uplink channel quality of the full bandwidth corresponding to the terminal, the network device needs to perform beamforming by using the PMI weight. However, because the PMI weight is a discrete codebook obtained through channel quality quantization, and cannot perfectly fit all specific channel quality conditions, precision and a direction of the PMI weight used for beamforming are not good. In this case, the network device cannot quickly and accurately learn of the channel quality of the terminal, and a data transmission rate is increased slowly.

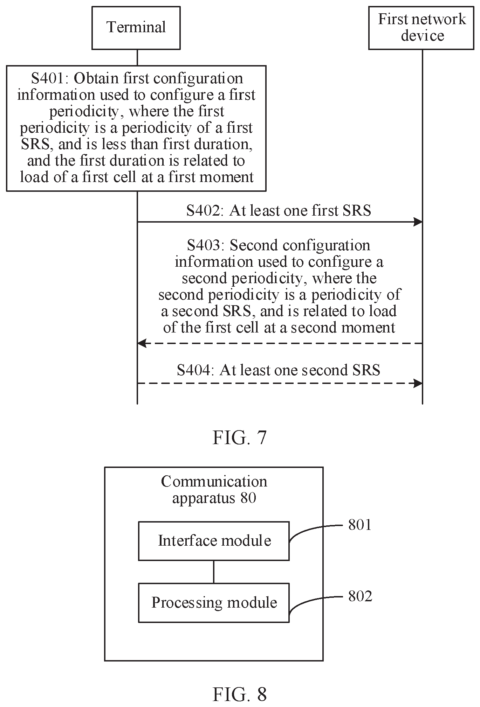

To resolve the foregoing problem, this application provides an SRS transmission method. In the method, a network device may configure an SRS periodicity for a terminal. The periodicity is less than specific duration, so that the terminal can complete sending of an SRS in short time, and the network device can obtain, in short time, uplink channel quality of full bandwidth corresponding to the terminal, and perform beamforming by using the SRS as soon as possible. Therefore, the method can shorten duration in which the network device performs beamforming by using a PMI weight, so that the network device quickly and accurately learns of the channel quality of the terminal, thereby improving a data transmission rate. The method is specifically described in the following methods shown in FIG. 4 and FIG. 7. Details are not described herein.

It may be understood that the SRS transmission method provided in this application may be applied to various communication systems. For example, the communication system may be a universal mobile telecommunications system (universal mobile telecommunications system, UMTS), an LTE system, a 5G communication system, a Wi-Fi system, a 3GPP-related communication system, a future evolved communication system (for example, a 6th generation (6th generation, 6G) communication system), or a system integrating a plurality of systems. This is not limited. 5G may also be referred to as NR. The method provided in this application is described below by using a communication system 20 shown in FIG. 2 as an example. FIG. 2 is merely a diagram, and does not constitute a limitation on an application scenario of the technical solutions provided in this application.

FIG. 2 is a diagram of an architecture of the communication system 20 according to this application. In FIG. 2, the communication system 20 may include a network device 201 and a terminal 204 that can communicate with the network device 201. Optionally, the communication system 20 further includes a network device 202 and/or a network device 203. The communication system 20 may further include a terminal 205.

In FIG. 2, the network device may provide a wireless access service for the terminal. Specifically, each network device corresponds to one service coverage area. A terminal that enters the area may communicate with the network device through an air interface (air interface), to receive a wireless access service provided by the network device. Optionally, the service coverage area may include one or more cells. The terminal and the network device may communicate with each other through an air interface link. Air interface links may be classified into an uplink (uplink, UL) and a downlink (downlink, DL) based on directions of data transmitted through the air interface links. Uplink data sent by the terminal to the network device may be transmitted on the UL, and downlink data transmitted by the network device to the terminal may be transmitted on the DL. For example, in FIG. 2, the terminal 204 is located in a coverage area of the network device 201, the network device 201 may send downlink data to the terminal 204 through a DL, and the terminal 204 may send uplink data to the network device through a UL. For other descriptions of the network device and the terminal, refer to the foregoing descriptions of the network device and the terminal. Details are not described again.

The communication system 20 shown in FIG. 2 is merely an example, and is not intended to limit the technical solutions of this application. A person skilled in the art should understand that, in a specific implementation process, the communication system 20 may further include another device, and a quantity of network devices and a quantity of terminals may alternatively be determined based on a specific requirement. This is not limited.

Optionally, each network element or device (for example, the network device 201, the network device 202, the network device 203, the terminal 204, or the terminal 205) in FIG. 2 of this application may also be referred to as a communication apparatus, and may be a general-purpose device or a dedicated device. This is not specifically limited in this application.

Optionally, related functions of each network element or device (for example, the network device 201, the network device 202, the network device 203, the terminal 204, or the terminal 205) in FIG. 2 of this application may be implemented by one device, may be jointly implemented by a plurality of devices, or may be implemented by one or more functional modules in one device. This is not specifically limited in this application. It may be understood that the foregoing function may be a network element in a hardware device, a software function running on dedicated hardware, a combination of hardware and software, or an instantiated virtualized function on a platform (for example, a cloud platform).

During specific implementation, each network element or device (for example, the network device 201, the network device 202, the network device 203, the terminal 204, or the terminal 205) in FIG. 2 may use a composition structure shown in FIG. 3, or include components shown in FIG. 3. FIG. 3 is a diagram of a hardware structure of a communication apparatus to which this application is applicable. The communication apparatus 30 includes at least one processor 301 and at least one communication interface 304, to implement the method provided in this application. The communication apparatus 30 may further include a communication line 302 and a storage 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information between the foregoing components, for example, a bus.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The storage 303 may be a read-only memory (read-only memory, ROM) or another type of static storage device that can store static information and instructions or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact disc, a laser disc, an optical disc, a digital versatile disc, a Blu-ray disc, or the like) and a magnetic disk storage medium or another magnetic storage device, or any other medium that can be configured to carry or store expected program code in a form of instructions or a data structure and that is accessible by a computer, but is not limited thereto. The storage may exist independently, and is coupled to the processor 301 through the communication line 302. The storage 303 may alternatively be integrated with the processor 301. Usually, the storage provided in this application may be non-volatile.

The storage 303 is configured to store computer-executable instructions for performing the solutions provided in this application, and the processor 301 controls execution of the computer-executable instructions. The processor 301 is configured to execute the computer-executable instructions stored in the storage 303, to implement the method provided in this application. Alternatively, optionally, in this application, the processor 301 may perform a processing-related function in the method provided below in this application, and the communication interface 304 is responsible for communicating with another device or a communication network. This is not specifically limited in this application.

Optionally, the computer-executable instructions in this application may also be referred to as application program code. This is not specifically limited in this application.

The coupling in this application is an indirect coupling or a communication connection between apparatuses, units, or modules, may be in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive user input in a plurality of manners. For example, the input device 306 may be a mouse, a keyboard, a touchscreen device, or a sensor device.

It may be understood that the composition structure shown in FIG. 3 does not constitute a limitation on the communication apparatus. In addition to the components shown in FIG. 3, the communication apparatus may include more or fewer components than those shown in the figure, or some components may be combined, or the components may be arranged differently.

The following describes the method provided in this application with reference to the accompanying drawings. Network elements in the following embodiments may have the components shown in FIG. 3. Details are not described again.

It may be understood that names of messages between network elements, names of parameters in messages, or the like in the following embodiments of this application are merely examples, and there may alternatively be other names during specific implementation. This is not specifically limited in this application.

It may be understood that "sending information to... (for example, a terminal)" in this application may be understood as that a destination end of the information is the terminal, and may include directly or indirectly sending the information to the terminal. "Receiving information from... (for example, the terminal)" may be understood as that a source end of the information is the terminal, and may include directly or indirectly receiving the information from the terminal. Information may undergo necessary processing, for example, a format change, between the source end and the destination end of information sending. However, the destination end may understand valid information from the source end. A similar expression in this application may be understood similarly. Details are not described herein again.

It may be understood that, in this application, "/" may represent an "or" relationship between associated objects. For example, A/B may represent A or B. "And/or" may be used to describe three relationships between associated objects. For example, A and/or B may represent the following three cases: Only A exists, both A and B exist, and only B exists. A and B may be singular or plural. In addition, an expression similar to "at least one of A, B, and C" or "at least one of A, B, or C" usually represents any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the expression, a meaning of the expression may be obtained according to the foregoing rules.

For ease of description of the technical solutions of this application, in this application, the terms "first", "second", and the like may be used to distinguish between technical features with a same function or similar functions. The terms such as "first" and "second" do not limit a quantity or an execution order, and the terms such as "first" and "second" do not necessarily indicate a difference. In this application, terms such as "example" or "for example" represent giving an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that in embodiments of this application, sequence numbers of processes do not mean a sequence of execution. The sequence of execution of the processes should be determined based on functions and internal logic of the processes, and should not constitute any limitation on an implementation process of this application.

It may be understood that, in this application, "indication" may include a direct indication and an indirect indication, or may include an explicit indication and an implicit indication. When a piece of indication information indicates A, the indication information may directly indicate A or indirectly indicate A, but it does not indicate that the indication information definitely carries A. Information indicated by a piece of information (for example, first indication information described below) is referred to as to-be-indicated information. In this case, in a specific implementation process, the to-be-indicated information may be indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to a specific extent.

It may be understood that in this application, "when", "in a case in which", "if", and "it is assumed that" all mean that corresponding processing is performed in an objective case, are not intended to limit time, do not require a determining action to necessarily exist during implementation, and do not mean that there is another limitation.

"Simultaneously" in this application may be understood as being at a same time point, may be understood as being in a period of time, or may be understood as being in a same periodicity.

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, an apparatus provided in this application may also correspondingly implement these features or functions. Details are not described herein.

It may be understood that, in this application, a same step, or steps or technical features that have a same function may be mutually referenced between different embodiments.

It may be understood that in this application, a first network device, and/or a second network device, and/or a third network device, and/or a terminal may perform some or all of the steps in this application. These steps are merely examples. In this application, other steps or variations of various steps may be further performed. In addition, the steps may be performed in a sequence different from that presented in this application, and not all the steps in this application may be performed.

It may be understood that in the following method provided in this application, an example in which a network device (for example, the first network device, the second network device, or the third network device) and the terminal are used as execution bodies of the interaction diagram is used to illustrate the method. However, an execution body of the interaction diagram is not limited in this application. For example, the network device in the method provided in the following embodiments of this application may alternatively be a chip, a chip system, or a processor that supports the network device in implementing the method, or may be a logical node, a logical module, or software that can implement all or some functions of the network device. The terminal in the method provided in the following embodiments of this application may alternatively be a chip, a chip system, or a processor that supports the terminal in implementing the method, or may be a logical node, a logical module, or software that can implement all or some functions of the terminal.

FIG. 4 shows an SRS transmission method provided in this application. The SRS transmission method may include the following steps.

S401: A terminal obtains first configuration information.

In this application, the terminal may be the terminal 204 in the communication system 20 shown in FIG. 2.

In this application, the first configuration information may be used to configure a first periodicity. The first periodicity is a periodicity of a first SRS, and the first periodicity is less than specific duration. For example, the first periodicity is less than first duration. The first duration is related to load of a first cell at a first moment (for example, a quantity of users of the first cell at the first moment and/or a service volume of the first cell at the first moment). It should be understood that the first moment may be a time point or a time period. This is not limited. The first cell is a cell of a first network device.

For example, if an SRS periodicity determined based on the load of the first cell at the first moment is eight slots (slots), the first periodicity configured by using the first configuration information is less than the eight slots. For example, the first periodicity is five slots, four slots, two slots, or the like. In this way, duration in which the terminal completes sending the first SRS can be shortened, so that a network side obtains channel quality of full bandwidth (in other words, full bandwidth corresponding to the terminal) of operating bandwidth of the first cell as soon as possible.

In a possible design, the first configuration information includes first indication information. The first indication information indicates the first periodicity. For example, the first indication information includes the first periodicity, the first indication information includes an identifier of the first periodicity, or the first indication information includes a quantity of time units included in the first periodicity, for example, a quantity of slots/symbols/subframes. Optionally, the first indication information further includes a time domain offset, indicating an offset of a start location of the first periodicity relative to a reference location. For example, if the reference location is a 1^{st} symbol in a slot 1, and the time domain offset is two symbols, the start location of the first periodicity is a 3^{rd} symbol in the slot 1. Optionally, the first configuration information further includes information about a time-frequency resource of the first SRS. The information about the time-frequency resource of the first SRS indicates the time-frequency resource of the first SRS, so that the terminal sends the first SRS by using the time-frequency resource.

For example, the first configuration information may be used to configure an SRS resource information element. The SRS resource information element may include periodicityAndOffset-p and/or periodicityAndOffset-p-Ext which are/is used to configure the first periodicity. In other words, the first indication information is periodicityAndOffset-p and/or periodicityAndOffset-p-Ext. Optionally, when periodicityAndOffset-p and periodicityAndOffset-p-Ext appear at the same time, the first periodicity indicated by periodicityAndOffset-p-Ext is used. An example in which the first indication information is "periodicityAndOffset-p" is used. Content included in the SRS resource information element may be shown in Table 1. In Table 1, the first indication information is periodicityAndOffset-p, indicating the first periodicity. For example, when a value of periodicityAndOffset-p is "sl1", it indicates that the first periodicity is one slot; when a value of periodicityAndOffset-p is "sl2", it indicates that the first periodicity is two slots; and the rest can be deduced by analogy.

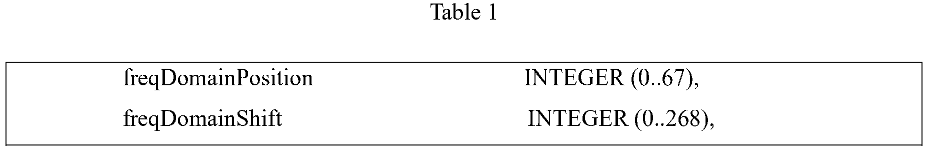

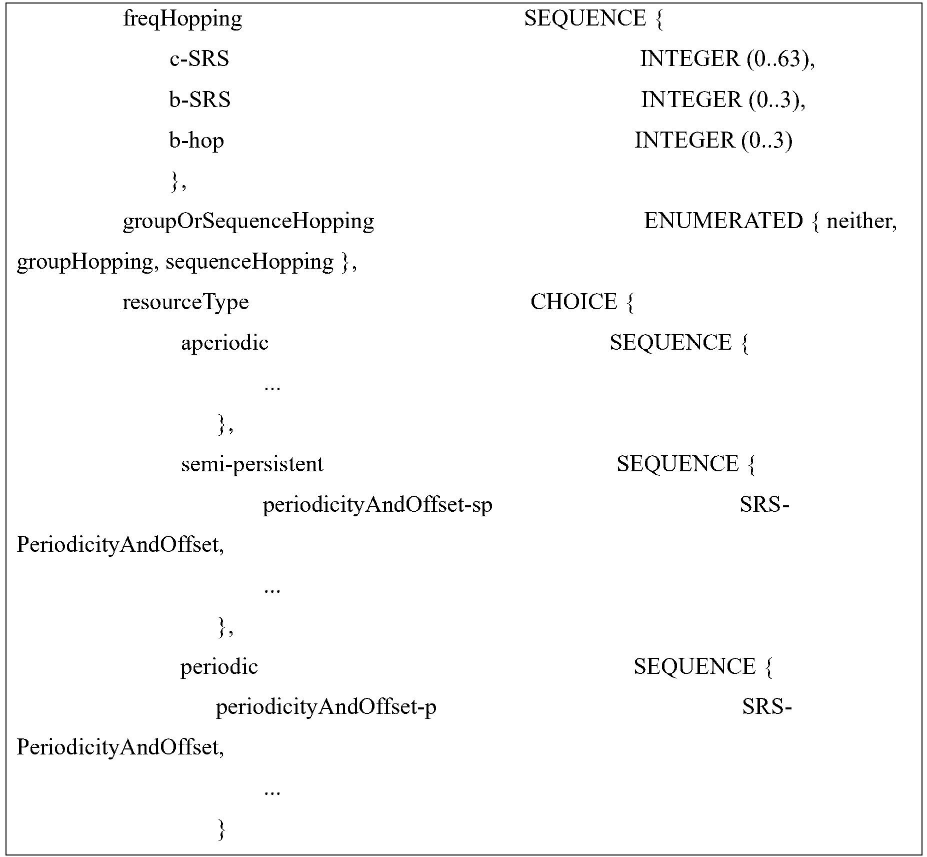

It may be understood that Table 1 is merely an example of the first configuration information. In specific application, the first configuration information may alternatively be used to configure the first periodicity in another form, and values of the first periodicity are different in different scenarios. For example, in a cross-link interference (cross-link interference, CLI) SRS-RSRP measurement scenario, the first periodicity is not sl1280 (that is, 1280 slots) or sl2560 (that is, 2560 slots). In a scenario in which an SRS is used for positioning (position), the first configuration information may be used to configure an SRS-PosResource information element, and the information element is used to configure the first periodicity. In addition, when a subcarrier spacing (subcarrier spacing, SCS) is 15 kHz, the first periodicity is not sl20480 (that is, 20480 slots), sl40960 (that is, 40960 slots), and sl81920 (that is, 81920 slots). When an SCS is 30 kHz, the first periodicity is not sl81920 (that is, 81920 slots) and sl40960 (that is, 40960 slots). When an SCS is 60 kHz, the first periodicity is not sl81920 (that is, 81920 slots).

Optionally, the first configuration information is carried in an RRC reconfiguration message.

In this application, manners in which the terminal obtains the first configuration information vary in different scenarios. The following separately uses a scenario in which the terminal initially accesses a network, a scenario in which the terminal re-accesses the network, an RRC resume scenario, a cell handover scenario, an SCG addition scenario, an intra-PSCell handover scenario, and an inter-PSCell handover scenario as examples for description. It should be understood that the foregoing scenarios are merely examples of a scenario to which the method provided in this application may be applied. In addition to the foregoing scenarios, the method provided in this application may be further applied to another scenario, for example, a scenario introduced by a communication system after 5G. This is not limited.

Manner 1: The terminal obtains the first configuration information from the first network device, where the first cell is a current serving cell of the terminal. In other words, after accessing the first cell, the terminal may obtain the first configuration information from the first network device. Specifically, after the terminal accesses the first cell, the first network device generates the first configuration information, and sends the first configuration information to the terminal. The terminal receives the first configuration information, in other words, obtains the first configuration information. Optionally, the first network device reserves a part of time domain resources, and the time domain resources are used by the terminal to send the first SRS. The first network device may be the network device 201 in the communication system shown in FIG. 2.

Example 1: In an example in which Manner 1 is applied to the scenario in which the terminal initially accesses the network, the first network device is equivalent to the network device in FIG. 1A. After the terminal sets up an RRC connection to the network device through S1001 to S1003, the network device generates the first configuration information, and sends the first configuration information to the terminal by using the RRC reconfiguration message in S1004 (for example, an SRS resource set indicates the first periodicity and the time-frequency resource of the first SRS).

Example 2: In an example in which Manner 1 is applied to the scenario in which the terminal re-accesses the network, the first network device is equivalent to the network device in FIG. 1B. After the terminal sets up an RRC connection to the network device through S1101 to S1103, the network device generates the first configuration information, and sends the first configuration information to the terminal by using the RRC reconfiguration message in S1104 (for example, an SRS resource set indicates the first periodicity and the time-frequency resource of the first SRS).

Example 3: In an example in which Manner 1 is applied to the RRC resume scenario, after the terminal resumes an RRC connection to the first network device in an RRC resume process, the first network device generates the first configuration information, and sends the first configuration information to the terminal by using an RRC reconfiguration message (for example, an SRS resource set indicates the first periodicity and the time-frequency resource of the first SRS).

Manner 2: The terminal obtains the first configuration information from a second network device, where the first cell is a cell to be accessed by the terminal. Specifically, the first network device generates the first configuration information, and sends the first configuration information to the second network device. After receiving the first configuration information, the second network device sends the first configuration information to the terminal. The terminal receives the first configuration information, in other words, obtains the first configuration information. It should be understood that, after receiving the first configuration information, the second network device may directly forward the first configuration information to the terminal, or may further process the first configuration information, for example, add information, delete information, modify information, or re-encapsulate information, and send processed information to the terminal. This is not limited. Optionally, the first network device reserves a part of time domain resources, and the time domain resources are used by the terminal to send the first SRS. The first network device is different from the second network device. For example, the first network device is the network device 202 or the network device 203 in the communication system shown in FIG. 2, and the second network device is the network device 201.

Example 4: In an example in which Method 2 is applied to the cell handover scenario, the first network device is equivalent to the network device A in FIG. 1C, and the second network device is equivalent to the network device B in FIG. 1C. After receiving a handover request sent by the network device B, the network device A may generate the first configuration information, and send the first configuration information to the network device B by using the HO request ACK message in S1203. After receiving the HO request ACK message, the network device B sends the first configuration information to the terminal by using the RRC reconfiguration message in S1204 (for example, an SRS resource set indicates the first periodicity and the time-frequency resource of the first SRS).

Example 5: In an example in which Method 2 is applied to the SCG addition scenario, the first network device is equivalent to the network device A in FIG. 1D, and the second network device is equivalent to the network device B in FIG. 1D. After receiving an SGNB add request sent by the network device B, the network device A may generate the first configuration information, and send the first configuration information to the network device B by using the SGNB add ACK message in S1305. After receiving the SGNB add ACK message, the network device B sends the first configuration information to the terminal by using the RRC reconfiguration message in S1306 (for example, an SRS resource set indicates the first periodicity and the time-frequency resource of the first SRS).

Example 6: In an example in which Method 2 is applied to the intra-PSCell handover scenario, the first network device is equivalent to the network device A in FIG. 1E, and the second network device is equivalent to the network device B in FIG. 1E. After receiving an SGNB modify request sent by the network device B, the network device A may generate the first configuration information, and send the first configuration information to the terminal by using the RRC reconfiguration message in S1403 (for example, an SRS resource set indicates the first periodicity and the time-frequency resource of the first SRS). After receiving RRC connection reconfiguration complete from the terminal, the network device B sends an SGNB modify confirm message in S1405 to the network device A.

Example 7: In an example in which Method 2 is applied to the inter-PSCell handover scenario, the first network device is equivalent to the network device A in FIG. 1F, and the second network device is equivalent to the network device B in FIG. 1F. After receiving an SGNB add request sent by the network device B, the network device A may generate the first configuration information, and send the first configuration information to the network device B by using the HO request ACK message in S1504. After receiving the SGNB add request ACK message, the network device B sends the first configuration information to the terminal by using the RRC reconfiguration message in S1505 (for example, an SRS resource set indicates the first periodicity and the time-frequency resource of the first SRS).

For Example 1 to Example 7, after obtaining the first configuration information, the terminal may send the first SRS to the first network device based on the first configuration information. Because the first periodicity is less than the first duration, the first network device may obtain the channel quality of the full bandwidth of the operating bandwidth of the first cell as soon as possible, to shorten duration in which the first network device performs beamforming by using a PMI weight, thereby improving a data transmission rate.

S402: The terminal sends at least one first SRS to the first network device based on the first periodicity. Correspondingly, the first network device receives the at least one first SRS from the terminal.

In this application, the terminal sends the first SRS in different manners when a quantity of the at least one first SRS is 1 and when the quantity of the at least one first SRS is greater than 1. The following provides detailed descriptions.

In a possible implementation, if the quantity of the at least one first SRS is greater than 1, frequency domain resources of any two of the at least one first SRS are different. The frequency domain resources are located in the operating bandwidth of the first cell. In other words, the terminal may send the first SRS in a frequency hopping manner.

For example, an example in which the operating bandwidth of the first cell is continuous in frequency domain and the quantity of the at least one first SRS is 4 is used. A manner in which the terminal sends the at least one first SRS may be shown in FIG. 5. In FIG. 5, in a 1^{st} first periodicity, the terminal sends a first SRS by using a resource 501; in a 2^{nd} first periodicity, the terminal sends a first SRS by using a resource 502; in a 3^{rd} first periodicity, the terminal sends a first SRS by using a resource 503; and in a 1^{st} fourth periodicity, the terminal sends a first SRS by using a resource 504. In other words, the terminal sends the first SRSs, in the four first periodicities, on an entirety of the frequency domain resources of the operating bandwidth of the first cell, so that the first network device can obtain the channel quality of the full bandwidth of the operating bandwidth of the first cell within duration corresponding to the four first periodicities. Then, the first network device may perform beamforming based on the obtained channel quality, to increase the data transmission rate. The terminal sends the SRSs in the foregoing frequency hopping manner. The terminal may send a first SRS corresponding to a frequency domain resource after completing detection on a part of frequency bands, instead of sending the first SRS only after completing detection on the full bandwidth of the operating bandwidth. This helps improve frequency band utilization. In addition, a capability of resisting channel frequency selective fading is enhanced.

In another possible implementation, if the quantity of the at least one first SRS is equal to 1, the at least one first SRS occupies all the operating bandwidth of the first cell. In other words, the terminal simultaneously sends the first SRS on all the operating bandwidth of the first cell.

For example, an example in which the operating bandwidth of the first cell is continuous in frequency domain is used. A manner in which the terminal sends the first SRS may be shown in FIG. 6. In FIG. 6, in a 1^{st} first periodicity, the terminal sends the first SRS by using a resource 601. In other words, the terminal sends the first SRS, in the one first periodicity, on an entirety of the frequency domain resource of the operating bandwidth of the first cell, so that the first network device can obtain the channel quality of the full bandwidth of the operating bandwidth of the first cell within duration corresponding to the one first periodicity. Then, the first network device may perform beamforming based on the obtained channel quality, to increase the data transmission rate. In addition, because the first network device may obtain, in the one first periodicity, the channel quality of the full bandwidth of the operating bandwidth of the first cell, the data transmission rate can be increased more quickly than that when the terminal sends the first SRSs in the frequency hopping manner.

It may be understood that, in different scenarios, the terminal sends the at least one first SRS to the first network device on different occasions based on the first periodicity. The following provides detailed descriptions.

For Example 1, after S1004, the terminal may send the at least one first SRS to the network device based on the first periodicity configured by using the RRC reconfiguration message in S1004.

For Example 2, after S1104, the terminal may send the at least one first SRS to the network device based on the first periodicity configured by using the RRC reconfiguration message in S1104.

For Example 3, after the RRC connection is resumed, the terminal may send the at least one first SRS to the network device based on the first periodicity configured by using the RRC reconfiguration message.

For Example 4, after S1204, the terminal may send the at least one first SRS to the network device based on the first periodicity configured by using the RRC reconfiguration message in S1204.

For Example 5, after S1306, the terminal may send the at least one first SRS to the network device based on the first periodicity configured by using the RRC reconfiguration message in S1306.

For Example 6, after S1403, the terminal may send the at least one first SRS to the network device based on the first periodicity configured by using the RRC reconfiguration message in S1403.

For Example 7, after S1505, the terminal may send the at least one first SRS to the network device based on the first periodicity configured by using the RRC reconfiguration message in S1505.

According to the method shown in FIG. 4, the terminal may obtain the periodicity for sending the first SRS, and send the at least one first SRS based on the periodicity. The periodicity is less than specific duration. Therefore, in the method shown in FIG. 4, the first network device that receives the first SRS can collect the channel quality of the full bandwidth of the first cell of the first network device as soon as possible, and perform beamforming based on the channel quality. Therefore, the duration in which the first network device performs beamforming by using the PMI weight can be reduced, thereby improving the data transmission rate.

Optionally, in a possible implementation of the method shown in FIG. 4, after the first network device obtains the channel quality of the full bandwidth of the first cell, to ensure communication quality of the terminal, the first network device may reconfigure, based on load of the first cell for the terminal, a periodicity for sending an SRS, so that the terminal sends the SRS based on the periodicity, and the first network device performs channel estimation based on the received SRS. Specifically, as shown in FIG. 7, the method shown in FIG. 4 may further include the following steps.

S403: The first network device sends second configuration information to the terminal. Correspondingly, the terminal receives the second configuration information from the first network device.

In this application, the second configuration information is used to configure a second periodicity. The second periodicity is a periodicity of a second SRS, and the second periodicity is related to load of the first cell at a second moment. For example, the second periodicity is the same as an SRS periodicity determined based on the load of the first cell at the second moment. The second moment is later than the first moment.

In a possible design, the second configuration information includes second indication information. The second indication information indicates the second periodicity. For example, the second indication information includes the second periodicity, or the second indication information includes an identifier of the second periodicity. Optionally, the second configuration information further includes information about a time-frequency resource of the second SRS. The information about the time-frequency resource of the second SRS indicates the time-frequency resource of the second SRS, so that the terminal sends the second SRS by using the time-frequency resource.

For example, if the SRS periodicity determined based on the load of the first cell at the second moment is eight slots, the second periodicity indicated by the second indication information is equal to eight slots.

Optionally, the second configuration information is carried in an RRC reconfiguration message.

S404: The terminal sends at least one second SRS to the first network device based on the second periodicity. Correspondingly, the first network device receives the at least one second SRS from the terminal.

It may be understood that a process in which the terminal sends the at least one second SRS to the first network device based on the second periodicity is similar to a process in which the terminal sends the at least one first SRS to the first network device based on the first periodicity. Therefore, refer to corresponding descriptions in S402. Details are not described again.

An action of the terminal, the first network device, or the second network device in S401 to S404 may be performed by the processor 301 in the communication apparatus 30 shown in FIG. 3 by invoking the application program code stored in the storage 303. This is not limited in this application.

Embodiments mentioned above in this application may be combined when the solutions do not conflict. This is not limited.

The foregoing mainly describes the solutions provided in this application from a perspective of interaction between network elements. Correspondingly, this application further provides a communication apparatus. The communication apparatus may be the terminal in the foregoing method embodiments, an apparatus including the terminal, or a component that may be used in the terminal. Alternatively, the communication apparatus may be the first network device in the foregoing method embodiments, an apparatus including the first network device, or a component that may be used in the first network device. It may be understood that, to implement the foregoing functions, the terminal, the first network device, or the like includes a corresponding hardware structure and/or software module for performing each function. A person skilled in the art should be easily aware that, with reference to the example units and algorithm operations described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that, the foregoing uses only the terminal and the first network device as an example to describe interaction between network elements. Actually, processing performed by the terminal is not limited to being performed only by a single network element, and processing performed by the first network device is not limited to being performed only by a single network element. For example, processing performed by the first network device may be separately performed by at least one of a central unit (central unit, CU), a distributed unit (distributed unit, DU), and a remote unit (remote unit, RU).

In this application, functional modules of the terminal or the first network device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. During actual implementation, there may be another division manner.

For example, when functional modules are obtained through division in an integrated manner, FIG. 8 is a diagram of a structure of a communication apparatus 80. The communication apparatus 80 includes an interface module 801 and a processing module 802. The interface module 801 may also be referred to as an interface unit, and is configured to perform sending and receiving operations. For example, the interface module may be an interface circuit, a transceiver machine, a transceiver, or a communication interface. The processing module 802 may also be referred to as a processing unit, is configured to perform an operation other than the sending and receiving operations, and for example, may be a processing circuit or a processor.

In some embodiments, the communication apparatus 80 may further include a storage module (not shown in FIG. 8), configured to store program instructions and data.

For example, the communication apparatus 80 is configured to implement a function of a terminal. The communication apparatus 80 is, for example, the terminal described in the embodiment shown in FIG. 4 or the embodiment shown in FIG. 7.

The interface module 801 is configured to receive first configuration information. The first configuration information is used to configure a first periodicity, the first periodicity is less than first duration, and the first duration is related to load of a first cell at a first moment. For example, the interface module 801 may be configured to perform S401.

The processing module 802 is configured to control the interface module to send at least one first sounding reference signal based on the first periodicity, where the at least one first sounding signal is used to estimate channel quality of full bandwidth of operating bandwidth of the first cell. For example, the processing module 802 may be configured to perform S402.

In a possible implementation, the first cell is a cell of a first network device. The interface module 801 is specifically configured to receive the first configuration information from a second network device, where the first network device is different from the second network device.

In a possible implementation, the first cell is the cell of the first network device, and the interface module 801 is specifically configured to receive the first configuration information from the second network device, where the first network device is different from the second network device.

In a possible implementation, the interface module 801 is specifically configured to receive the first configuration information after accessing the first cell.

In a possible implementation, the first configuration information includes first indication information, and the first indication information indicates the first periodicity.

In a possible implementation, a quantity of the at least one first sounding reference signal is greater than 1, frequency domain resources of any two of the at least one first sounding reference signal are different, and the frequency domain resources are located in the operating bandwidth of the first cell; or a quantity of the at least one first sounding reference signal is equal to 1, and the at least one first sounding reference signal occupies all the operating bandwidth of the first cell.

In a possible implementation, the interface module 801 is further configured to receive second configuration information, where the second configuration information is used to configure a second periodicity, the second periodicity is related to load of the first cell at a second moment, and the second moment is later than the first moment; and the processing module 802 is further configured to control the interface module 801 to send at least one second sounding reference signal based on the second periodicity.

In a possible implementation, the first configuration information is carried in a radio resource control reconfiguration message.

When the communication apparatus 80 is configured to implement the function of the terminal, for another function that can be implemented by the communication apparatus 80, refer to related descriptions of the embodiment shown in FIG. 4 or the embodiment shown in FIG. 7. Details are not described again.

Alternatively, for example, the communication apparatus 80 is configured to implement a function of a first network device. The communication apparatus 80 is, for example, the first network device in the embodiment shown in FIG. 4, the embodiment shown in FIG. 7, or the embodiment shown in FIG. 5.

The interface module 801 is configured to send first configuration information. The first configuration information is used to configure a first periodicity, the first periodicity is less than first duration, and the first duration is related to load of a first cell at a first moment. For example, the interface module 801 may be configured to perform S401.

The processing module 802 is configured to control the interface module to receive at least one first sounding reference signal based on the first periodicity, where the at least one first sounding signal is used to estimate channel quality of full bandwidth of operating bandwidth of the first cell. For example, the processing module 802 may be configured to perform S402.

In a possible implementation, the first configuration information includes first indication information, and the first indication information indicates the first periodicity.

In a possible implementation, the interface module 801 is specifically configured to send the first configuration information to a terminal after the terminal accesses the first cell.

In a possible implementation, the interface module 801 is specifically configured to send the first configuration information to a second network device, where the second network device is different from the first network device.

In a possible implementation, a quantity of the at least one first sounding reference signal is greater than 1, frequency domain resources of any two of the at least one first sounding reference signal are different, and the frequency domain resources are located in the operating bandwidth of the first cell; or a quantity of the at least one first sounding reference signal is equal to 1, and the at least one first sounding reference signal occupies all the operating bandwidth of the first cell.

In a possible implementation, the interface module 801 is further configured to send second configuration information, where the second configuration information is used to configure a second periodicity, the second periodicity is related to load of the first cell at a second moment, and the second moment is later than the first moment; and the processing module 802 is further configured to control the interface module 801 to receive at least one second sounding reference signal based on the second periodicity.

In a possible implementation, the first configuration information is carried in a radio resource control reconfiguration message.

When the communication apparatus 80 is configured to implement the function of the first network device, for another function that can be implemented by the communication apparatus 80, refer to related descriptions of the embodiment shown in FIG. 4 or FIG. 7. Details are not described again.

In a simple embodiment, a person skilled in the art may figure out that the communication apparatus 80 may be in a form shown in FIG. 3. For example, the processor 301 in FIG. 3 may invoke the computer-executable instructions stored in the storage 303, to enable the communication apparatus 80 to perform the method in the foregoing embodiments.

For example, functions/implementation processes of the interface module 801 and the processing module 802 in FIG. 8 may be implemented by the processor 301 in FIG. 3 by invoking the computer-executable instructions stored in the storage 303. Alternatively, a function/an implementation process of the processing module 802 in FIG. 8 may be implemented by the processor 301 in FIG. 3 by invoking the computer-executable instructions stored in the storage 303, and a function/an implementation process of the interface module 801 in FIG. 8 may be implemented by the communication interface 304 in FIG. 3.

It may be understood that one or more of the foregoing modules or units may be implemented by software, hardware, or a combination thereof. When any one of the foregoing modules or units is implemented by software, the software exists in a form of computer program instructions, and is stored in the storage. The processor may be configured to execute the program instructions and implement the foregoing method procedure. The processor may be disposed in a SoC (system on a chip) or an ASIC, or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a chip system, including at least one processor and an interface. The at least one processor is coupled to a storage through the interface. When the at least one processor executes a computer program or instructions in the storage, the method in any one of the foregoing method embodiments is performed. In a possible implementation, the chip system further includes a storage. Optionally, the chip system may include a chip, or may include a chip and another discrete device. This is not specifically limited in this application.

Optionally, this application further provides a computer-readable storage medium. All or some procedures in the foregoing method embodiments may be implemented by a computer program instructing related hardware. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the foregoing communication apparatus. Further, the computer-readable storage medium may alternatively include both an internal storage unit and an external storage device of the communication apparatus. The computer-readable storage medium is configured to store the computer program and store other programs and data that are needed by the communication apparatus. The computer-readable storage medium may be further configured to temporarily store data that has been output or is to be output.

Optionally, this application further provides a computer program product. All or some procedures in the foregoing method embodiments may be implemented by a computer program instructing related hardware. The program may be stored in the foregoing computer program product. When the program is executed, the procedures in the foregoing method embodiments may be included.

Optionally, this application further provides computer instructions. All or some of the procedures in the foregoing method embodiments may be implemented by the computer instructions instructing related hardware (for example, a computer, a processor, a terminal, or a first network device). The program may be stored in the foregoing computer-readable storage medium or the foregoing computer program product.

Optionally, this application further provides a communication system, including the first network device and the terminal in the foregoing embodiments. Optionally, the communication system further includes a second network device.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the division into the modules or units is merely logical function division and may be other division during actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A sounding reference signal transmission method, wherein the method comprises:
receiving first configuration information, wherein the first configuration information is used to configure a first periodicity, the first periodicity is less than first duration, and the first duration is related to load of a first cell at a first moment; and
sending at least one first sounding reference signal based on the first periodicity, wherein the at least one first sounding signal is used to estimate channel quality of full bandwidth of operating bandwidth of the first cell.

2. The method according to claim 1, wherein the first cell is a cell of a first network device, and the receiving the first configuration information comprises:
receiving the first configuration information from a second network device, wherein the first network device is different from the second network device.

3. The method according to claim 1, wherein the receiving the first configuration information comprises:
receiving the first configuration information after accessing the first cell.

4. The method according to any one of claims 1 to 3, wherein the first configuration information comprises first indication information, and the first indication information indicates the first periodicity.

5. The method according to any one of claims 1 to 4, wherein
a quantity of the at least one first sounding reference signal is greater than 1, frequency domain resources of any two of the at least one first sounding reference signal are different, and the frequency domain resources are located in the operating bandwidth of the first cell; or
a quantity of the at least one first sounding reference signal is equal to 1, and the at least one first sounding reference signal occupies all the operating bandwidth of the first cell.

6. The method according to any one of claims 1 to 5, wherein the method further comprises:
receiving second configuration information, wherein the second configuration information is used to configure a second periodicity, the second periodicity is related to load of the first cell at a second moment, and the second moment is later than the first moment; and
sending at least one second sounding reference signal based on the second periodicity.

7. The method according to any one of claims 1 to 6, wherein the first configuration information is carried in a radio resource control reconfiguration message.

8. A sounding reference signal transmission method, wherein the method comprises:
sending first configuration information, wherein the first configuration information is used to configure a first periodicity, the first periodicity is less than first duration, and the first duration is related to load of a first cell at a first moment; and
receiving at least one first sounding reference signal based on the first periodicity, wherein the at least one first sounding signal is used to estimate channel quality of full bandwidth of operating bandwidth of the first cell.

9. The method according to claim 8, wherein the first configuration information comprises first indication information, and the first indication information indicates the first periodicity.

10. The method according to claim 8 or 9, wherein the sending the first configuration information comprises:
sending the first configuration information to a terminal after the terminal accesses the first cell.

11. The method according to claim 8 or 9, wherein the method is applied to a first network device, and the sending the first configuration information comprises:
sending the first configuration information to a second network device, wherein the second network device is different from the first network device.

12. The method according to any one of claims 8 to 11, wherein
a quantity of the at least one first sounding reference signal is greater than 1, frequency domain resources of any two of the at least one first sounding reference signal are different, and the frequency domain resources are located in the operating bandwidth of the first cell; or
a quantity of the at least one first sounding reference signal is equal to 1, and the at least one first sounding reference signal occupies all the operating bandwidth of the first cell.

13. The method according to any one of claims 8 to 12, wherein the method further comprises:
sending second configuration information, wherein the second configuration information is used to configure a second periodicity, the second periodicity is related to load of the first cell at a second moment, and the second moment is later than the first moment; and
receiving at least one second sounding reference signal based on the second periodicity.

14. The method according to any one of claims 8 to 13, wherein the first configuration information is carried in a radio resource control reconfiguration message.

15. A communication apparatus, comprising a unit or module configured to perform the method according to any one of claims 1 to 7, or a unit or module configured to perform the method according to any one of claims 8 to 14.

16. A communication apparatus, comprising a processor, wherein the processor is coupled to a storage, the storage is configured to store a program or instructions; and when the program or the instructions are executed by the processor, the apparatus is enabled to perform the method according to any one of claims 1 to 7 or the method according to any one of claims 8 to 14.

17. A computer-readable storage medium, wherein the computer-readable storage medium stores a computer program or instructions; and when the computer program or the instructions are executed, a computer is enabled to perform the method according to any one of claims 1 to 7 or the method according to any one of claims 8 to 14.

18. A computer program product, wherein the computer program product comprises computer program code; and when the computer program code is run on a computer, the computer is enabled to implement the method according to any one of claims 1 to 7 or the method according to any one of claims 8 to 14.

19. A communication system, comprising an apparatus configured to perform the method according to any one of claims 1 to 7, and/or an apparatus configured to perform the method according to any one of claims 8 to 14.
